# EUROPEAN PATENT SPECIFICATION

(11) **EP 0 499 636 B1**
(45) Date of publication and mention of the grant of the patent: **24.05.1995**
(21) Application number: 91917556.2
(22) Date of filing: 26.08.1991
(51) Int. Cl.: H04N 1/46

(54) **COLOR SEQUENTIAL SCANNER INCORPORATING A SYNCHRONIZED VARIABLE EXPOSURE SHUTTER**
SEQUENTIELLER FARBABTASTER MIT SYNCHRONISIERTEM VARIABLEN VERSCHLUSS
ANALYSEUR SEQUENTIEL COULEUR COMPORTANT UN OBTURATEUR D'EXPOSITION VARIABLE SYNCHRONISE

(30) Priority: 31.08.1990 US 575772
(43) Date of publication of application: 26.08.1992
(73) Proprietor: EASTMAN KODAK COMPANY, Rochester, New York 14650-2201 (US)
(72) Inventor: PARULSKI, Kenneth, Alan, Rochester, NY 14617 (US); GEISBUESCH, Gordon, E. Rochester, NY 14445 (US); RUTTER, John, Charles, Rochester, NY 14616 (US)
(74) Representative: Parent, Yves
(86) International application number: US9106022
(87) International publication number: WO9204799

(56) References cited:
- DE-A- 3 515 268
- DE-A- 3 540 528
- DE-A- 3 729 188
- US-A- 4 713 683

## Description

The present invention relates to optical systems for transforming a fixed color image to an electrically storable color image and more particularly to such a system incorporating an illuminant synchronized variable exposure shutter.

In many applications, it is desirable to convert fixed color images, for example photographic negatives or prints, into electrically storable images. One method for accomplishing this is to use a monochrome image sensor and three color filters, which are placed into the light path one at a time, to obtain red, green, and blue (RGB) color separation images which can be combined to form a single color image. A typical system works by illuminating the fixed image and focusing the image through a lens and an RGB color filter wheel onto an image sensor. One example of such a system is described in U.S. Patent No. 2,478,598 entitled, 'Variable Color Filter Assembly for Television Transmitting Systems' by Frank J. Somers. It is desirable in such systems that the video signals representing the red, green and blue component colors produced by the system be equal, for white or grey portions of the color image. However, the light transmitting efficiency of the filters and the spectral response of the image sensor are typically different for red, green, and blue. U.S. Patent No. 2,478,598 teaches a method for compensating for these differences by changing the relative sizes of the rotating red, green, and blue filters, and thus the relative sensor exposure times for the red, green, and blue separations. This provides more uniform signal levels for the red, green, and blue separations from neutral image objects, otherwise referred to as providing better "white balance". Because the shutters for the red, green, and blue filters described in that patent are affixed to the rotating filter wheel which spins at a constant velocity, only a limited range of exposure times can be obtained.

A second patent of interest for its teachings is U.S. Patent No. 4,713,683, entitled "Illuminating and Synchronizing Device for Color Imaging Equipment" by Fujimori et al. The device of that patent utilizes a color filter wheel and an illuminating light source having an intensity level which varies when the different color filters are positioned in front of the image sensor. The color filters have different sizes, chosen according to the sensitivity of the image sensor to the particular color of the filter.

When converting color negative film images into electrical signals using a charge coupled device (CCD) image sensor with a full frame architecture, the differences between the red, green, and blue exposure times required to obtain proper white balance are especially significant. This is because normal color negative films have a yellow mask which absorbs most of the blue light, and because full frame image sensors have a significantly reduced response to blue light, relative to red and green light, due to the spectrally selective absorption of the polysilicon layer which overlays the sensor's photosites. Furthermore, the light sources typically used in such systems contain tungsten bulbs, which provide very little energy in the blue spectral region, compared to the energy they emit in the red and green regions. Fluorescent light sources provide significantly more blue energy, but unlike tungsten lamps, the light output of fluorescent bulbs fluctuates significantly in response to the phase of the AC line voltage. The aforementioned causes undesirable variations in the illumination level of the sensor. What is needed is a way to provide a light source with a high content of blue spectral energy, and a means to provide the needed range of exposure times for red, green, and blue to obtain proper white balance, while also providing consistent sensor exposures which do not change from one image capture to the next.

The apparatus of the present invention provides accurate white balance for images from a color sequential image converting system while minimizing the object illumination level by using a shutter separate from the color filter wheel, in order to provide a wide range of exposure times for the red, green, and blue separations. The apparatus also includes a fluorescent light source which provides adequate power in the blue spectral region and a circuit for synchronizing the shutter opening time to the frequency of the light source in order to prevent undesirable variations in the illumination level.

From the foregoing it can be seen that it is a primary object of the present invention to provide an improved system for converting color print images into electrically storable images.

It is another object of the present invention to provide color images with proper white balance.

Another object of the present invention is the provision of a three filter color wheel and a separately controllable shutter to provide color separation images.

Yet another object of the present invention is the provision of a system wherein the exposure times and the shutter operation are synchronized to the frequency of an illumination source.

These and other objects of the present invention will become more apparent when taken in conjunction with the following description and drawings wherein like characters indicate like parts and which drawings form a part of the present description.

Figure 1 is a block diagram illustrating one preferred embodiment of the invention.

Figure 2 is a graph of the spectral response of the image sensor used in the system of Figure 1.

Figure 3 is a graph of the spectral energy output of a tungsten and a fluorescent lamp.

Figure 4 is a graph of the light output for typical tungsten and fluorescent lamps.

Figure 5 is an electrical schematic diagram illustrating one preferred embodiment of portions of the control circuitry of Figure 1.

Figure 6 is a flowchart of one preferred embodiment of the software control of the system of Figure 1.

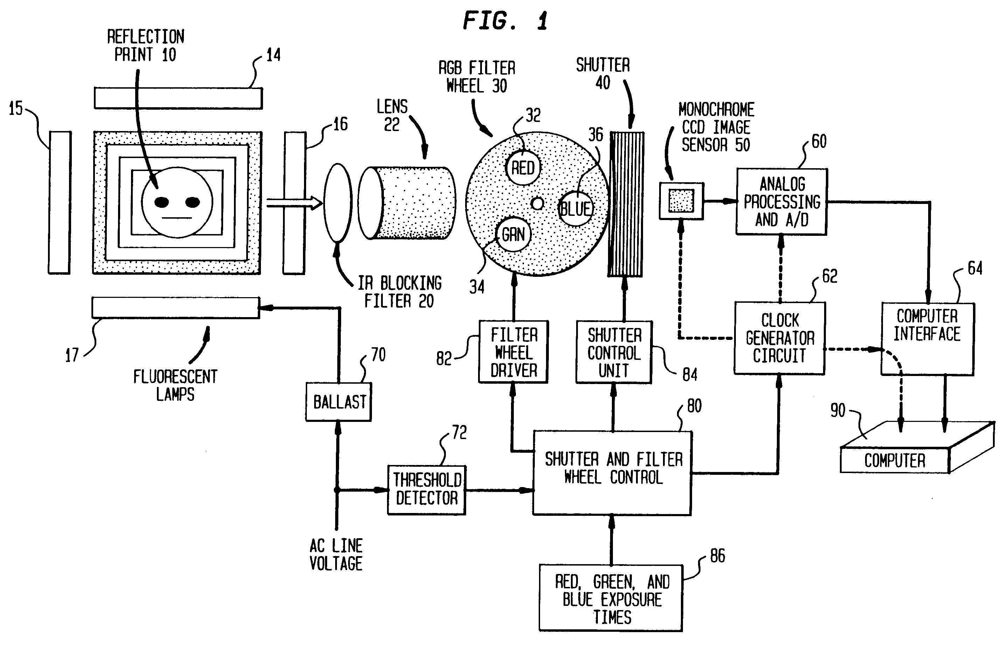

Figure 1 is a block diagram of one preferred system embodiment of the invention. In this preferred system a photographic reflection print 10 is positioned to be illuminated by four fluorescent lamps 14, 15, 16, and 17. The lamps are preferably model F6T5/D lamps available from Philips Lighting Company, Syracuse, New York, which lamps are powered by a 115 volt 60 cycle line voltage via a ballast circuit 70. The ballast is preferably of the type bearing Catalog Number F8 and manufactured by the Keystone Transformer Company. The image on the photographic reflection print 10 is focused by a lens 22, preferably a Nikon MicroNikkor 55mm lens manufactured by Nikon, Inc. onto a monochrome CCD image sensor 50, which is preferably a 1024 x 1532 active element, full frame, image sensor of the type bearing Part Number KAF-1600 and manufactured by Eastman Kodak Company, Rochester, New York. An RGB filter wheel 30, incorporating a Red filter 32, a Green filter 34, and a Blue filter 36 is positioned in the optical path between the lens 22 and the image sensor 50. The filters are preferably of the type called Colorband™ dichroic color separation filters which are manufactured by OCLI, Santa Rosa, California. An electrically driven mechanical shutter 40, is also situated between the lens 22 and the CCD image sensor 50. The shutter 40 is preferably a Uniblitz™ Model 23X2A2S5H that is controlled by a shutter control unit 84, preferably a model 100-2B, both of which are manufactured by Vincent Associates, Rochester, New York. An infrared blocking filter 20, preferably a Model BG-40 manufactured by Schott Glass Technologies, Inc., Durya, Pennsylvania, is also inserted in the optical path to block long wavelength light from degrading the images.

The output of the CCD image sensor 50 is connected to a Analog processing and A/D block 60, which performs the normal amplification, correlated double sampling, and A/D functions well known to those familiar with the art of CCD image sensors. The digitized image outputted from block 60 is input to a computer 90, which can be, for example, a model 3/110 workstation manufactured by Sun Microsystems, Mountain View, California, and equipped with an interface card 64, preferably a General Purpose Video Framestore Model 9100 card manufactured by the Eastman Kodak Company, Rochester, New York.

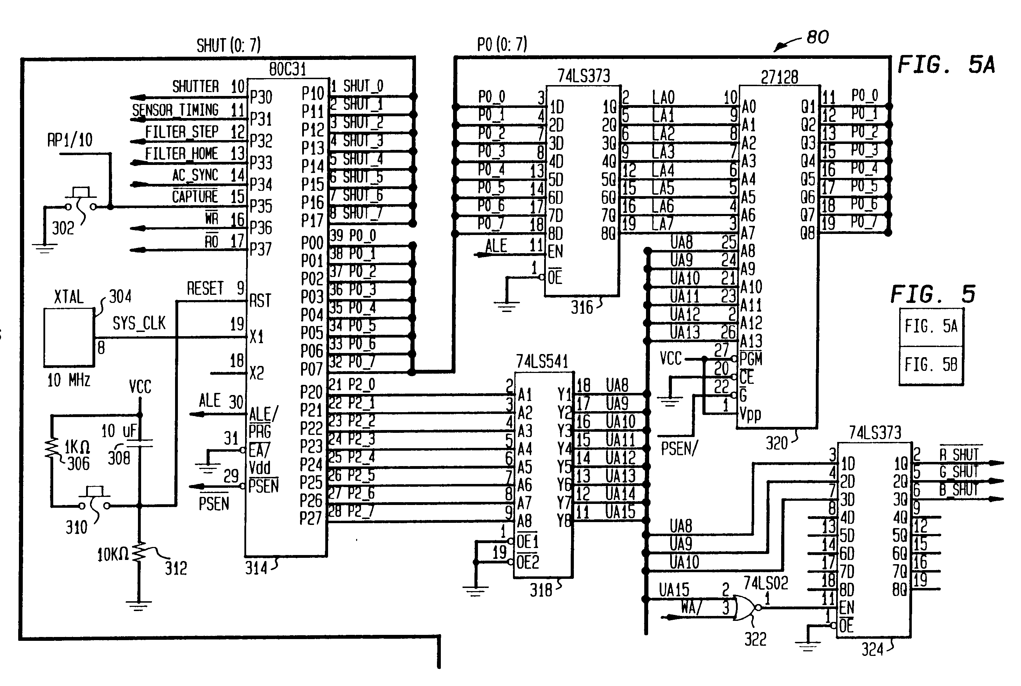

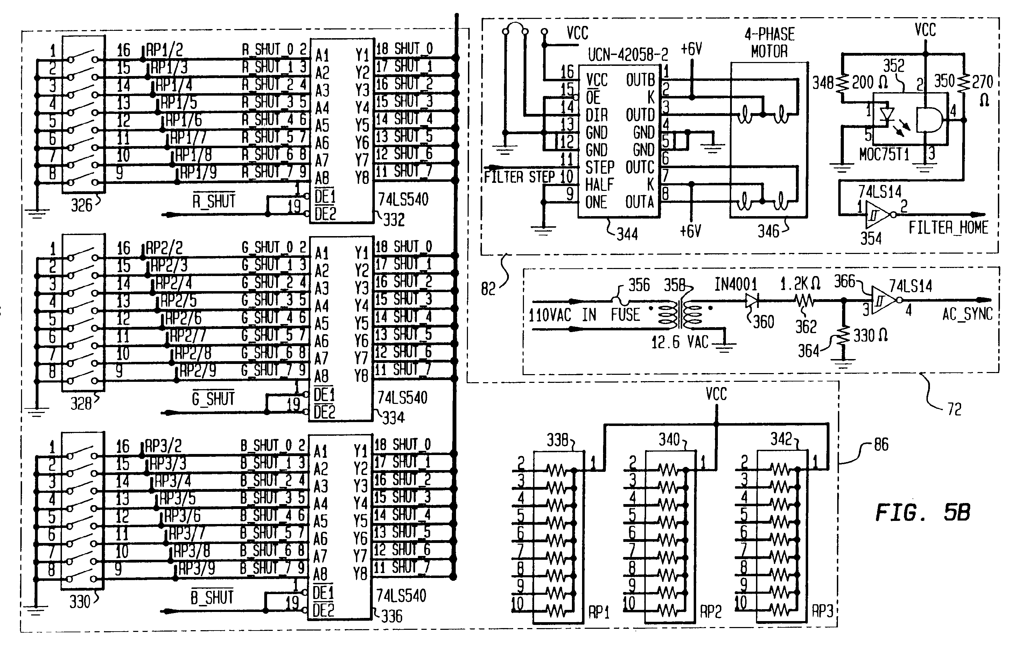

The CCD image sensor 50 is controlled by a Clock Generator Circuit 62 which utilizes a programmable clock generator integrated circuit, Part Number PCG, manufactured by Eastman Kodak Company, Rochester, New York. In particular, the sensor integration period which is provided by the Clock Generator Circuit 62, to control the CCD image sensor 50, is synchronized with a pulse supplied by a Shutter and Filter Wheel control block 80. Block 80 is in turn synchronized to an alternating current (AC) line voltage via a Threshold Detector 72 (illustrated in detail in Figure 5). The Shutter and Filter Wheel Control Block 80 (illustrated in detail in Figure 5), also controls the Filter Wheel Driver Block 82 (illustrated in detail in Figure 5). Digital values, indicating the desired red, green, and blue exposure times, are provided to the Shutter and Filter Wheel Control Block 80 by the RGB Exposure Times Block 86 (illustrated in detail in Figure 5).

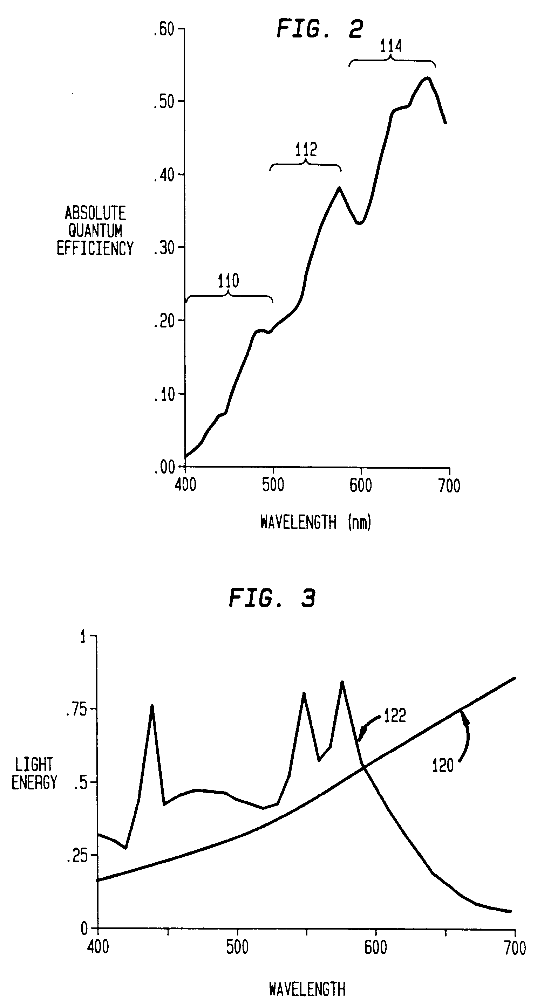

Turning now to Figure 2, there is shown in graphical form the absolute quantum efficiency of the CCD image sensor 50 of Figure 1. As can be easily seen from the Figure, the quantum efficiency of the CCD in the blue spectral region 110, that is between the wavelengths of 400 to 500 nanometers, is significantly lower that the quantum efficiency for the green region 112, between 500 and 600 nanometers, and even lower still compared to quantum efficiency in the red region 114, between 600 and 700 nanometers. This presents a problem in obtained proper white balance, since either the red and green light must be significantly attenuated before reaching the sensor, or a means of providing significantly longer exposure times for the blue color separation must be provided.

Turning now to Figure 3, there is shown a curve 120 representing the typical relative emission spectrum of the light from a tungsten lamp, similar to those used in prior art systems for converting fixed images into electrically storable images. As can be seen, the energy emitted in the blue spectral region is significantly lower than in the green region, while the red energy is much higher that the green energy. The use of a tungsten light source in combination with a sensor with an absolute quantum efficiency similar to that shown in Figure 2 would present a serious problem with obtaining proper white balance, since the exposure time of the blue separation would need to be more than a factor of 10 greater than for the red. This problem would be even more severe if the system of Figure 1 were scanning negative photographic film, since the transmittance of such a film in the blue spectral region is significantly less than in the red spectral region.

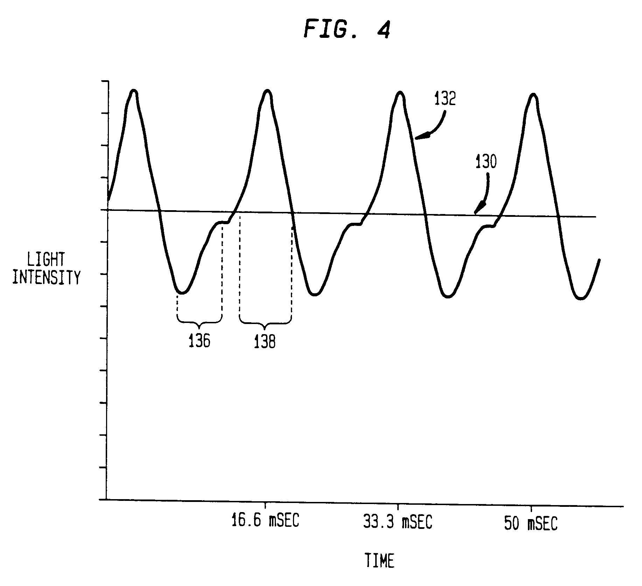

A light source with more blue energy is therefore desirable. Figure 3 also shows a curve 122 depicting the emission spectrum of the fluorescent light source used in the system of Figure 1. As can be seen from the figure, there is significantly less energy in the red spectral region, which is desirable because it helps compensate the sensor quantum efficiency curve of Figure 2. Unfortunately, fluorescent light sources are difficult to utilize in a system for transforming a fixed image to an electrically storable image, since they do not have a temporally constant light output. Rather, their light output varies with time, or "flickers", as shown by curve 132 in Figure 4. This creates a problem in that if the sensor exposure occurs during time period 136, the sensor will receive much less light than if the sensor exposure occurs during time period 138, even though the two exposure times are equal. Tungsten lamps, by comparison, have a constant light output as a function of time, as shown by a curve 130 in Figure 4.

In order to solve the problems described, the inventors of the present invention have designed the apparatus shown in Figure 1 in such a manner as to eliminate the problems associated with using a flickering fluorescent illumination source while also providing for a wide range of sensor exposure times for the red, green, and blue separations by controlling a shutter separate from the filter wheel so that it always opens at a time synchronized to the phase of the flickering light output of the illumination source.

Since the inventors have recognized that the flickering light output of the fluorescent source is synchronized to the AC line voltage which powers the source, the AC line voltage is used as the phase reference to which the shutter is synchronized.

Figure 5 is an electrical schematic diagram of the threshold detector circuit 72, the shutter and filter wheel control circuit 80, the filter wheel driver 82, and the red, green, and blue exposure times control 86, all of Figure 1.

The threshold detector circuit 72 functions as follows. The line voltage is converted from 110 volts AC to 12.6 volts AC in transformer 358, rectified by diode 360, attenuated by the voltage divider formed by resistors 362 and 364, and converted to a digital signal, AC_SYNC, by a Schmitt-Trigger inverter 366. The digital signal from inverter 366 is connected to the Shutter and Filter Wheel Control Circuit 80 of Figure 5.

The Shutter and Filter Wheel Control Circuit 80 of Figure 5 functions as follows. A microprocessor 314, which is Part Number 80C31 manufactured by Intel Corp. is used to control the shutter and filter wheels, and to synchronize the CCD imager readout via the SENSOR_TIMING signal, which is connected to the clock generator circuit 62 of Figure 5. The microprocessor 314 is clocked by a crystal 304 at a 10 MHz clock frequency. A pushbutton switch 310, in conjunction with resistors 306 and 312 and capacitor 308, generates a reset pulse for the microprocessor 314. Another pushbutton switch 302 is used to start the sequence of events needed to capture an image. An Octal D-Type Latch 316 and Octal Tri-state Buffer 318 provide the addresses to an EPROM 320, which stores the microprocessor program. The C language code for this program is listed in the attached appendix.

The Octal D-type latch 324 and a nor gate 322 allow for memory mapping of the output lines ^R_SHUT, ^G_SHUT, and ^B_SHUT. These lines along with the input lines SHUT(0:7) to microprocessor 314 give the ability to read the values from the RGB Exposure Time Circuit 86 of Figure 5.

The microprocessor 314 signals the shutter control unit 84 to open and close via the SHUTTER signal line. It also controls the red, green, and blue filter wheel position via the FILTER_STEP output line and the FILTER_HOME input line, which feed the Filter Wheel Driver block 82 of Figure 5.

The Filter Wheel Driver block 82 of Figure 5 functions as follows. A motor controller 344 advances a 4-phase stepper motor (filter wheel drive motor) 346 by one step when the FILTER_STEP line from the microprocessor 314 is set high. The filter wheel drive motor 346 may be mechanically linked to the RGB filter wheel 30 via a belt drive (not shown). The position of the filter wheel is sensed by an LED emitter and receiver 352, which connects to a Schmitt Trigger inverter 354. The FILTER_HOME output of inverter 354 is connected to the microprocessor 314. The digital value of the signal FILTER_HOME is 0 unless the filter wheel is positioned such that a small hole aligned with each of the three filter positions is directly between the LED emitter and receiver 352. The red filter position has a second hole near the position hole to denote this position as the home filter position. The controlling software determines if two consecutive holes are close enough to be the home position.

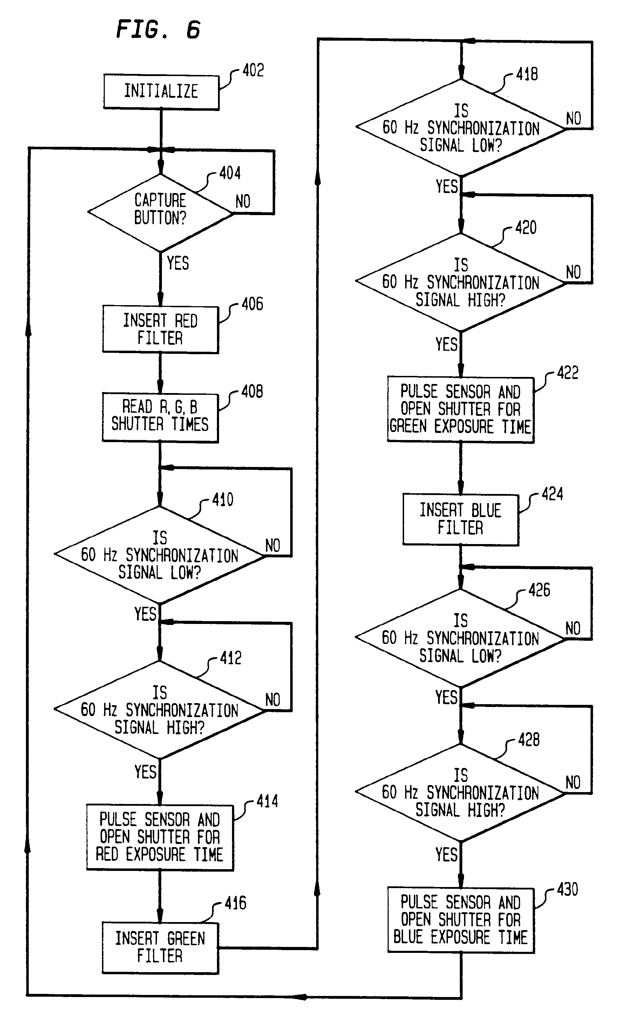

The RGB exposure circuit 86 of Figure 5 functions as follows. The red exposure time is set via switch 326, which connects to an Octal Tri-state buffer 332. Likewise, the green exposure values are set via switch 328, which connects to an Octal Tri-state buffer 334, and the blue exposure values are set via switch 330, which connects to an Octal Tri-state buffer 336. The Tri-state control inputs to buffers 332, 334, and 336 are controlled by the Shutter Wheel and Filter Control Circuit 80 of Figure 6 via lines ^R_SHUT, ^G_SHUT, and ^B_SHUT, so that the setting of the red, green and blue switches can be read, one at a time, by the microprocessor 314 via input lines SHUT (0:7). Note that although Figure 5 shows that the RGB shutter times are based on the setting of manual switches, they could alternately be set to values received from the computer 90 which receives the digitized images.

The sequence of operation required to capture a red, green, and blue image can now be explained. Figure 6 is a flowchart of the program used in the control of the scanner. At 402, the variables and the I/O ports are first initialized to their starting values. The software next waits at 404 for the capture button 302 of Figure 5 to be pressed, indicating the start of a capture. In 406, the filter wheel driver 82 of Figure 1 positions the red filter in the optical path. The red, green, and blue shutter times are sequentially read in step 408 from switches 602, 622, and 642 of Figure 5. In order to synchronize the shutter and sensor with the illumination system, the AC_SYNC signal of Figure 5 is continuously read until the rising edge of the signal is detected, steps 410 and 412. At that point, 414, the proper signals are sent to both the clock generator circuit 62 and the shutter control unit 84 to capture the red image information. After the first image is captured, the red filter is replaced by the green filter in step 416 and the next rising edge of AC_SYNC signal is detected in 418 and 420. In the same manner as above for the red, the proper signals are sent to both the clock generator circuit 62 and the shutter control unit 84 to capture the green information, step 422. The same sequence of events takes place for the blue image in steps 424 through 430, after which control transfers back to step 404, awaiting another capture.

While there has been shown what is considered to be the preferred embodiment of the invention, it will be manifest that many changes and modifications may be made therein without departing from the essential spirit of the invention. It is intended, therefore, in the annexed claims, to cover all such changes and modifications as may fall within the true scope of the invention.

## Claims

1. An imaging system comprising in combination:
an illumination source adapted for connection to an AC power source;
an original image positioned for illumination by said illumination source;
a sensor positioned to receive an image beam formed by the illumination of the original image; and
means interposed between the original image and said sensor for synchronizing the sensor exposure to the phase of the AC power source.

2. The scanner according to Claim 1 wherein said means interposed between the original image and said sensor is comprised of:
a filter wheel having a plurality of color filters mounted thereon; and
a shutter means responsive to the AC power source for exposing said sensor to the image beam in phase with the AC power source.

3. The scanner according to Claim 2 and further comprising;
threshold detector means connected to the AC power source for providing a threshold signal, which controls the opening of said shutter means.

4. An apparatus for converting fixed images into electrically storable images, said apparatus comprising:
means for illuminating a fixed image with an illumination source that flickers as a function of the frequency of a power source;
means for creating an image beam from said illuminated fixed image;
at least one array of photosensitive elements positioned to receive said image beam;
means for interrupting the light exposure of said array of photosensitive elements; and
means for controlling the interruption of said interrupting means in phase with the illumination level output of said flickering illumination source.

5. The apparatus according to Claim 4 wherein said means for interrupting the light exposure of said array of photosensitive elements is comprised of:
a filter wheel having a plurality of color filters mounted thereon; and
a shutter means for controlling the exposing of said array of photosensitive elements to the image beam which begins said exposing period in synchronization with the phase of the power source.

6. The apparatus according to Claim 5 and further comprising;
threshold detector means connected to the power source for providing a threshold signal to said means for controlling the exposing of said array of photosensitive elements to the image beam.

7. A color sequential scanner incorporating a synchronized variable exposure shutter comprising:
an illumination source comprised of at least one fluorescent lamp and powered by an AC source for illuminating a color image to form a color image beam;
a color filter means positioned for sequentially inserting each of the color filters in the formed color image beam;
a shutter means positioned for receiving and controllably passing the image beam from the color filters in said color filter wheel;
an image sensor means for converting the image beam passed by said shutter means into electrical signals;
a storage means for receiving and storing the electrical signals from said image sensor means;
a threshold detector means connected to said AC source for providing a synchronizing signal when the magnitude of the signal from the AC source is above a threshold value;
means for controlling said shutter means and said filter means for passing the image beam for each color filter for an exposure time period which begins in synchronization with the synchronizing signal from said threshold detector means; and
exposure time determination means for providing an exposure time signal to said means for controlling for setting the amount of time that the shutter means passes the image beam to said image sensor means.

## Patentansprüche

1. Farbbildabtaster, **gekennzeichnet durch**
eine an eine Wechselspannungsquelle anschließbare Lichtquelle,
eine zur Beleuchtung durch die Lichtquelle angeordnete Bildvorlage,
einen Bildsensor, der derart positioniert ist, daß er eine Abbildung der beleuchteten Bildvorlage empfängt, und
zwischen der Bildvorlage und dem Bildsensor angeordnete Mittel, um die Freigabe des Bildsensorstrahlengangs mit der Phasenlage der Wechselspannungsquelle zu synchronisieren.

2. Farbbildabtaster nach Anspruch 1, dadurch gekennzeichnet, daß die zwischen der Bildvorlage und dem Bildsensor angeordneten Mittel
ein Filterrad mit einer Vielzahl von Farbfiltern aufweisen sowie
einen auf die Wechselspannungsquelle reagierenden Verschluß zum mit der Wechselspannungsquelle phasengekoppelt erfolgenden Freilegen des im Abbildungsstrahlengang angeordneten Bildsensors.

3. Farbbildabtaster nach Anspruch 2, dadurch gekennzeichnet, daß
ein an die Wechselspannungsquelle angeschlossener Schwellenwertdetektor vorgesehen ist, der ein Schwellenwertsignal erzeugt und die Öffnung des Verschlusses steuert.

4. Vorrichtung zum Umwandeln von Bildvorlageninhalten in elektrisch speicherbare Bilder, gekennzeichnet durch
Mittel zum Beleuchten einer Bildvorlage mit einer Lichtquelle, die in Abhängigkeit von der Frequenz einer Wechselspannungsquelle flimmert,
Mittel zum Abbilden der beleuchteten Bildvorlage,
mindestens eine Anordnung lichtempfindlicher Elemente, die derart positioniert sind, daß sie die Abbildung empfangen,
Mittel zum Unterbrechen des Strahlengangs der Anordnung lichtempfindlicher Elemente und
Mittel zum mit der flimmernden Lichtquelle phasengekoppelten Steuern der von den Unterbrechungsmitteln bewirkten Unterbrechungsdauer in Abhängigkeit von der Lichtintensität.

5. Vorrichtung nach Anspruch 4, dadurch gekennzeichnet, daß die Mittel zum Unterbrechen des Strahlengangs der Anordnung lichtempfindlicher Elemente
ein Filterrad mit einer Vielzahl von Farbfiltern aufweisen sowie
einen Verschluß umfassen zum Steuern der Freigabe des Strahlengangs der Anordnung lichtempfindlicher Elemente zum Empfangen der Abbildung, wobei die Freigabe synchron mit der Phase der Wechselspannungsquelle beginnt.

6. Vorrichtung nach Anspruch 5, dadurch gekennzeichnet, daß
ein mit der Wechselspannungsquelle verbundener Schwellenwertdetektor vorgesehen ist, der ein Schwellenwertsignal an die Mittel zum Steuern der Freigabe des Strahlengangs der Anordnung lichtempfindlicher Elemente abgibt.

7. Sequentiell arbeitender Farbbildabtaster mit einem synchronisierten variablen Verschluß, gekennzeichnet durch
eine aus mindestens einer Fluoreszenzlampe bestehenden und aus einer Wechselspannungsquelle betriebenen Lichtquelle zum Beleuchten einer Farbbildvorlage, um eine farbige Abbildung zu erzeugen,
Farbfiltermittel, die derart angeordnet sind, daß sie nacheinander Farbfilter in den Abbildungsstrahlengang einbringen,
einen Verschluß, der derart angeordnet ist, daß er im Strahlengang der Farbfilter der Filtermittel liegt, um ihn gesteuert zu öffnen und zu unterbrechen,
einen Bildsensor zum Umwandeln der aus Richtung der Farbfilter kommenden und vom Verschluß durchgelassenen Abbildung in elektrische Signale,
einen Speicher zum Empfangen und Speichern der vom Bildsensor abgegebenen elektrischen Signale,
einen mit der Wechselspannungsquelle verbundenen Schwellenwertdetektor zum Erzeugen eines Synchronisationssignals, wenn die Größe des von der Wechselspannungsquelle abgegebenen Signals einen Schwellenwert übersteigt,
Mittel zum Steuern des Verschlusses und der Filter, um den Abbildungsstrahlengang für jedes der Farbfilter für eine Dauer freizugeben, die synchron mit dem vom Schwellenwertdetektor abgegebenen Synchronisationssignal beginnt, und
Mittel, die die Freigabedauer bestimmen und ein entsprechendes Signal an die Steuermittel abgeben, um die Zeit einzustellen, während der der Verschluß den Bildsensorstrahlengang freigibt.

## Revendications

1. Système de formation d'image comprenant en combinaison :
une source d'illumination agencée pour être reliée à une source d'alimentation en courant alternatif,
une image originale positionnée pour être illuminée par ladite source d'illumination,
un capteur positionné de manière à recevoir un faisceau d'image formé par l'illumination de l'image originale, et
un moyen interposé entre l'image originale et ledit capteur pour synchroniser l'exposition du capteur avec la phase de la source d'alimentation en courant alternatif.

2. Système de balayage selon la revendication 1, dans lequel ledit moyen interposé entre l'image originale et ledit capteur est constitué de :
une roue à filtre comportant une pluralité de filtres colorés montés sur celle-ci, et
un moyen d'obturateur répondant à la source d'alimentation en courant alternatif afin d'exposer ledit capteur au faisceau d'image en phase avec la source d'alimentation en courant alternatif.

3. Système de balayage selon la revendication 2, et comprenant de plus,
un moyen de détecteur de seuil relié à la source d'alimentation en courant alternatif pour procurer un signal de seuil, qui commande l'ouverture dudit moyen d'obturateur.

4. Appareil pour convertir des images fixes en images mémorisables électriquement, ledit appareil comprenant :
un moyen pour illuminer une image fixe avec une source d'illumination qui scintille en fonction de la fréquence d'une source d'alimentation,
un moyen de réalisation d'un faisceau d'image à partir de ladite image fixe illuminée,
au moins un réseau d'éléments photo-sensibles positionné de manière à recevoir ledit faisceau image,
un moyen pour interrompre l'exposition à la lumière dudit réseau d'éléments photosensibles, et
un moyen pour commander l'interruption dudit moyen d'interruption en phase avec le niveau d'illumination en sortie de ladite source d'illumination scintillante.

5. Appareil selon la revendication 4, dans lequel ledit moyen pour interrompre l'exposition à la lumière dudit réseau d'éléments photosensible est constitué de :
une roue à filtre comportant une pluralité de filtres colorés montés sur celle-ci, et
un moyen d'obturateur pour commander l'exposition dudit réseau d'éléments photosensibles au faisceau image qui commence ladite période d'exposition en synchronisation avec la phase de la source d'alimentation.

6. Appareil selon la revendication 5, et comprenant en outre,
un moyen de détecteur de seuil relié à la source d'alimentation pour procurer un signal de seuil audit moyen de contrôle de l'exposition dudit réseau d'éléments photosensibles au faisceau image.

7. Système de balayage séquentiel couleur incorporant un obturateur d'exposition variable synchronisé comprenant :
une source d'illumination constituée d'au moins une lampe fluorescente et alimentée par une source d'alimentation en courant alternatif pour illuminer une image couleur afin de former un faisceau image couleur,
un moyen de filtre couleur positionné de manière à insérer séquentiellement chacun des filtres couleurs dans le faisceau image couleur formé,
un moyen d'obturateur positionné de manière à recevoir et transmettre de façon commandable le faisceau image provenant des filtres couleurs de ladite roue à filtre couleur,
un moyen de capteur d'image pour convertir le faisceau image transmis par ledit moyen d'obturateur en signaux électriques,
un moyen de mémorisation pour recevoir et mémoriser les signaux électriques provenant dudit moyen de capteur d'image,
un moyen de détecteur de seuil relié à ladite source d'alimentation en courant alternatif pour procurer un signal de synchronisation lorsque l'amplitude du signal provenant de la source d'alimentation en courant alternatif est au-dessus d'une valeur de seuil,
un moyen pour commander ledit moyen d'obturateur et ledit moyen de filtre pour transmettre le faisceau image pour chacun des filtres couleurs pendant un intervalle de temps d'exposition qui commence en synchronisation avec le signal de synchronisation provenant dudit moyen de détecteur de seuil, et
un moyen de détermination de durée d'exposition pour procurer un signal de durée d'exposition audit moyen de commande pour fixer la quantité de temps pendant lequel le moyen d'obturateur transmet le faisceau image audit moyen de capteur image.
